# EUROPÄISCHE PATENTSCHRIFT

(11) **EP 2 304 469 B1**
(45) Veröffentlichungstag und Bekanntmachung des Hinweises auf die Patenterteilung: **10.07.2013**
(21) Anmeldenummer: 09765693.8
(22) Anmeldetag: 19.05.2009
(51) Int. Cl.: G01V 1/18

(54) **HYDROPHON FÜR EINE UNTERWASSERANTENNE**
HYDROPHONE FOR AN UNDERWATER ANTENNA
HYDROPHONE POUR ANTENNE SOUS-MARINE

(30) Priorität: 19.06.2008 DE 102008029269
(43) Veröffentlichungstag der Anmeldung: 06.04.2011
(73) Patentinhaber: ATLAS ELEKTRONIK GmbH, 28309 Bremen (DE)
(72) Erfinder: HOFFMANN, Peter, 28832 Achim-Baden (DE); JUNGE, Wilfried, 28309 Bremen (DE); MATISSEK, Gregor, 27211 Bassum (DE)
(86) Internationale Anmeldenummer: PCT/EP2009/056075
(87) Internationale Veröffentlichungsnummer: WO 2009/153113

(56) Entgegenhaltungen:
- EP-A- 1 347 310
- US-A- 4 228 532
- US-A- 4 545 041
- US-A- 4 866 683
- US-A- 5 517 467
- US-A- 5 691 960
- US-A- 6 029 113
- US-B1- 6 215 231

## Beschreibung

Die Erfindung betrifft ein Hydrophon für eine Unterwasserantenne nach dem Oberbegriff des Anspruchs 1.

Bei einem bekannten Hydrophon (DE 102 12 291 C1) sind die beiden Kugelhalbschalen des Kugel-Hydrophons gegensinnig polarisiert, die beiden äußeren Elektroden auf Nullpotential gelegt und die beiden inneren Elektroden über jeweils eine Anschlussleitung an je einen invertierenden Verstärkereingang eines von zwei Ladungsverstärkern einer Signalverarbeitungselektronik angeschlossen. Die beiden Anschlussleitungen sind dabei durch eine oder durch zwei nach Montage wasserdicht zu verklebenden Radialbohrungen in einer oder in beiden Kugelhalbschalen hindurchgeführt. Die Ladungsverstärker sind mit ihrem nicht invertierenden Verstärkereingang über je ein RC-Glied an Nullpotential gelegt. Die auf Nullpotential liegenden Außenelektroden bilden zugleich eine Abschirmung des Hydrophons gegen elektrische Störstrahlungen in der Umgebung.

Ein bekanntes Hydrophon für eine Unterwasserantenne (US 4,866,683) weist zwei piezokeramische Kugelhalbschalen auf, die auf von einander abgekehrten Seiten einer steifen, kreisrunden Trägerplatte aufgesetzt und an diese befestigt sind. Im Zentrum des von den Kugelhalbschalen überdeckten Bereichs der Trägerplatte sind Signalverarbeitungsbausteine angeordnet, die mit den inneren und äußeren elektrisch leitenden Oberflächen der beiden Kugelhalbschalen elektrisch verbunden sind. Innerhalb ihres von den Kugelhalbschalen überdeckten Bereichs ist die Trägerplatte mit mehreren, auf einem Kreis angeordneten, bogenförmigen Schlitzen versehen, die eine Bewegung des die Signalverarbeitungsbausteine tragende Zentrums der Trägerplatte, erlauben, wenn das Hydrophon von akustischer Energie beaufschlagt wird. Durch diese Beweglichkeit des Zentrums der Trägerplatte wird eine Beeinträchtigung der Empfindlichkeit des Hydrophons beseitigt und eine omnidirektionale Empfangscharakteristik des Hydrophons erzielt.

Der Erfindung liegt die Aufgabe zugrunde, ein Hydrophon der eingangs genannten Art bezüglich seiner Montagefreundlichkeit und Störunempfindlichkeit seiner Ausgangssignale zu verbessern.

Die Aufgabe ist durch die Merkmale des Anspruchs 1 gelöst.

Das erfindungsgemäße Hydrophon hat den Vorteil, dass zum elektrischen Anschließen der inneren Elektroden keine Radialbohrungen in den Kugelhalbschalen erforderlich sind. Vielmehr werden die inneren Elektroden von außen über die in der Trägerplatte eingebetteten Leiterbahnen und den mit diesen verbundenen, im Inneren der Hohlkugel liegenden Kontaktflächen an die Signalverarbeitungselektronik angeschlossen. Das verfahrenstechnisch aufwendige Bohren der keramischen Halbkugelschalen und das Verkleben der Bohrungen nach der Montage entfällt. Außerdem werden durch das Bohren verursachte Schwachstellen für die Druckfestigkeit der Hohlkugel vermieden. Durch die Unterteilung der aus steifern Leiterplattenmaterial Bestehenden Trägerplatte in einen die Kugelhalbschalen tragerden inneren Bereich und einen ihrer Aufhängung dienenden, außerhalb der Kungelhalbschalen liegenden äußeren Bereich und die Verbindung beider Bereiche durch eine flexible Materialzone wird in technisch einfacher Weise eine mechanisch stabile und körperschallentkoppelte Aufhängung des Hydrophons in der Unterwasserantenne erzielt, so dass das Hydrophon im Freifeld betrieben werden kann.

Zweckmäßige Ausführungsformen des erfindungsgemäßen Hydrophons mit vorteilhaften Weiterbildungen und Ausgestaltungen der Erfindung ergeben sich aus den weiteren Ansprüchen.

Gemäß einer vorteilhaften Ausführungsform der Erfindung weist die Trägerplatte innerhalb ihres in der Hohlkugel liegenden Bereichs eine Aussparung auf, die eine Verbindung zwischen den Innenräumen der von den beiden Kugelhalbschalen gebildeten Kugelhälften herstellt. Durch diese konstruktive Maßnahme bleibt die Kugelcharakteristik des Hydrophons uneingeschränkt erhalten.

Gemäß einer vorteilhaften Ausführungsform der Erfindung weist zumindest die innere Elektrode auf jeder Kugelhalbschale eine den Schalenrand übergreifende Kontaktzunge auf, die auf eine der Kontaktflächen auf der Trägerplatte kontaktiert ist. Die Kontaktierung zwischen Kontaktfläche und Kontaktzunge wird vorzugsweise mittels eines elektrisch leitenden Klebers sichergestellt. Auf diese Weise wird bei der Montage der Kugelhalbschalen, die spiegelsymmetrisch auf die Ober- und Unterseite der Trägerplatte aufgeklebt werden, eine zuverlässige elektrische Kontaktierung der inneren Elektroden erzielt.

Gemäß einer vorteilhaften Ausführungsform der Erfindung sind die beiden äußeren Elektroden der Kugelhalbschalen über je einen Leiterdraht auf eine der Kontaktflächen auf der Trägerplatte kontaktiert. Diese Kontaktierung kann durch Kleben oder Löten nach Zusammenbau von Trägerplatte und Kugelhalbschalen vorgenommen werden.

Gemäß einer vorteilhaften Ausführungsform der Erfindung sind auf der Trägerplatte innerhalb ihres von der Hohlkugel eingeschlossenen Bereichs Elektronikbausteine einer Signalverarbeitungselektronik, vorzugsweise Ladungsverstärker für die Hydrophonausgangssignale, angeordnet und mit Kontaktflächen auf der Trägerplatte kontaktiert. Durch diese konstruktive Gestaltung sind die von den Hydrophonen abgegebenen Kleinstsignale auf dem Weg zu den Vorverstärkern weitgehend abgeschirmt und somit gegen Einstrahlungen und Übersprechen weitestgehend geschützt. Damit können keine Störsignale in die empfindlichste Stelle der Signalkette, nämlich in das Hydrophon, einkoppeln. Zum Abschirmen sind die äußeren Elektroden der Kugelhalbschalen auf Nullpotential gelegt. Da im Inneren der Hohlkugel allein analoge Empfangssignale verarbeitet werden, die zur Weiterverarbeitung nach außen geleitet werden, ist eine Überlagerung der bei ihrer Digitalisierung entstehenden höherfrequenten Signalanteile durch die Schirmwirkung der Hohlkugel ausgeschlossen. Spannungsspitzen auf einem außerhalb verlaufenden Bussystem werden abgeschirmt. Die Integration der analogen Signalverarbeitung in die Hohlkugel trägt zur Erhöhung des Nutz/Störverhältnisses der Empfangssignale bei.

Die Erfindung ist anhand von in der Zeichnung dargestellten Ausführungsbeispielen nachfolgend näher beschrieben. Es zeigen, jeweils in schematisierter Darstellung:
- Fig. 1: einen Längsschnitt eines nicht-erfindungsgemäßen Hydrophons für eine Unterwasserantenne mit Trägerplatte und auf die Trägerplatte aufgesetzten keramischen Kugelhalbschalen,
- Fig. 2: eine Draufsicht auf die Trägerplatte in Fig. 1 bei abgenommener, oberer Kugelhalbschale,
- Fig. 3: ein Ersatzschaltbild des nicht-erfindungsgemäßen Hydrophons in Fig. 1 mit an das Hydrophon angeschlossenen Ladungsverstärkern,
- Fig. 4: eine Draufsicht eines erfindungsgemäßen Hydrophons nach Entfernen der oberen Kugelhalbschale,
- Fig. 5: einen Schnitt des erfindungsgemäßen Hydrophons längs der Linie V-V in Fig. 4.

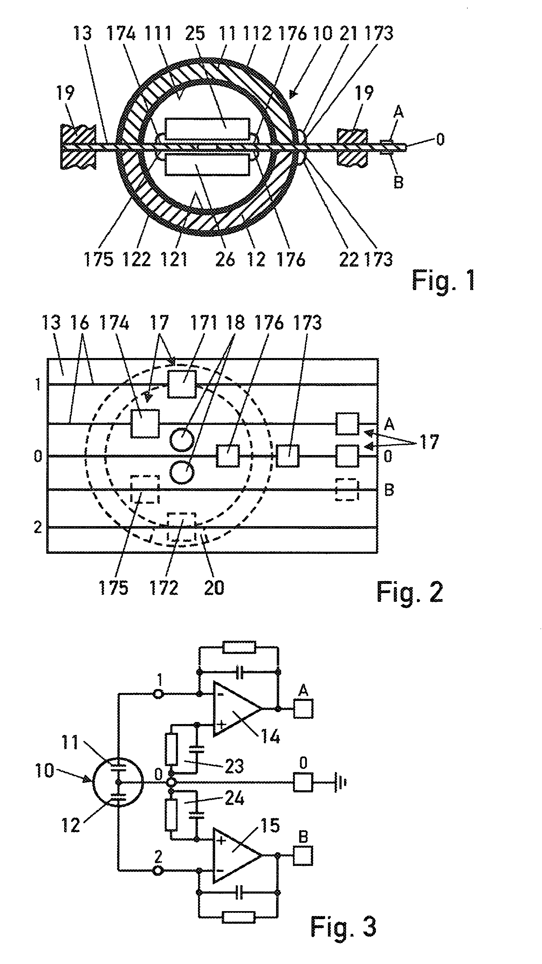

Das in Fig. 1 im Längsschnitt dargestellte Hydrophon weist zwei keramische Kugelhalbschalen 11, 12 aus radial polarisiertem, piezoelektrischem Material auf, die zu einer Hohlkugel 10 zusammengesetzt sind. Die beiden Kugelhalbschalen 11, 12 sind mit ihren kreisringförmigen Schalenflächen spiegelsymmetrisch auf die Unter- und Oberseite einer Trägerplatte 13 aus elektrisch isolierendem Material aufgesetzt und z.B. durch Kleben fest mit der Trägerplatte verbunden. Die inneren und äußeren Schalenflächen der beiden Kugelhalbschalen 21, 22 sind mit je einer Elektrode belegt. So weist die Kugelhalbschale 11 eine innere Elektrode 111 und eine äußere Elektrode 112 und die Kugelhalbschale 12 eine innere Elektrode 121 und eine äußere Elektrode 122 auf. Die Polarisierung der Kugelhalbschalen 11, 12 ist gegensinnig, sodass beispielsweise die Polarisierungsrichtung der Kugelhalbschale 11 von innen nach außen und die Polarisierung der Kugelhalbschale 12 von außen nach innen verläuft. Jede dieser Kugelhalbschalen 11, 12 bildet ein elektronisches Wandlerelement, das an einem Ladungsverstärker 14 bzw. 15 angeschlossen ist, wie dies in der in Fig. 3 dargestellten Schaltung angegeben ist.

Die Trägerplatte 13, die im nicht-erfindungsgemäßen Beispiel der Fig. 1 und 2 aus flexiblem Leiterplattenmaterial besteht, weist integrierte Leiterbahnen 16 auf und ist auf der Ober- und Unterseite mit geeignet platzierten Kontaktflächen 17 belegt, die mit definierten Leiterbahnen 16 verbunden sind. In der in Fig. 2 dargestellten Draufsicht der Trägerplatte 13 sind die auf der Oberseite vorhandenen Kontaktflächen 17 ausgezogen und die auf der Unterseite vorhandenen Kontaktflächen 17 strichliniert eingezeichnet.

Die Trägerplatte 13 weist innerhalb ihres in der Hohlkugel 10 liegenden Bereichs eine oder mehrere Aussparungen 18 (Fig. 1) auf, die eine Verbindung zwischen den Hohlräumen der beiden Kugelhalbschalen 11, 12 herstellen. Außerhalb des von der Hohlkugel 10 eingeschlossenen Bereichs ist die Trägerplatte 13 an einem Antennenträger 19 befestigt, wie dies in Fig. 1 schematisch skizziert ist. Durch die Flexibilität der Trägerplatte 13 kann das Hydrophon im Freifeld betrieben werden und weist eine gute Körperschallentkopplung gegenüber dem Antennenträger 19 auf und ist außerdem stabil und exakt am Antennenträger 19 aufgehängt.

Die Elektroden 111, 112, 121, 122 sind auf die Leiterbahnen 16 kontaktiert, was über die mit den Leiterbahnen 16 verbundenen Kontaktflächen 17 erfolgt. Zur Kontaktierung der beiden inneren Elektroden 111 und 121 der beiden Kugelhalbschalen 11, 12 setzt sich von jeder inneren Elektrode 111 bzw. 121 eine über die stirnseitige Schalenfläche herumgezogene Kontaktzunge 20 fort, wie dies für die untere Kugelhalbschale 12 in Fig. 2 strichliniert angedeutet ist. Beim Aufsetzen der Kugelhalbschalen 11, 12 auf die Trägerplatte 13 gelangen diese Kontaktzungen 20 in Zuordnung zu entsprechend vorgehaltenen Kontaktflächen 17 auf der Ober- bzw. Unterseite der Trägerplatte 13 und sind damit elektrisch leitend an die entsprechenden Leiterbahnen 16 in der Trägerplatte 13 angeschlossen. In Fig. 2 sind diese mit die Kontaktzungen 20 kontaktierende Kontaktflächen 17 auf der Ober- und Unterseite der Trägerplatte 13 mit 171, 172 bezeichnet. Zur Festigung der elektrischen Verbindung zwischen Kontaktzungen 20 und Kontaktflächen 171, 172 kann zwischen diesen noch ein elektrisch leitender Kleber eingebracht werden. Alternativ ist es bei Verzicht auf die Kontaktzungen 20 auch möglich, an den inneren Elektroden 111, 121 einen Leiterdraht zu befestigen, z.B. durch Löten oder Kleben, und die beiden Leiterdrähte mit den Kontaktflächen 171, 172, ebenfalls durch Löten oder Kleben zu verbinden. Die äußeren Elektroden 112, 122 der beiden Kugelhalbschalen 11, 12 sind an Nullpotential gelegt, wozu je ein an den äußeren Elektroden 112, 122 durch Kleben oder Löten befestigter Leiterdraht 21 bzw. 22 mit einer Kontaktfläche 173 auf der Ober- bzw. Unterseite de Trägerplatte 13 (Fig. 1) verbunden ist, die außerhalb des von der Hohlkugel 10 umschlossenen Bereichs der Trägerplatte 13 liegt. Die mit den beiden Kontaktflächen 173 verbundene Leiterbahn 16 ist an Nullpotential gelegt (Fig. 2).

Im Inneren der Hohlkugel 10 ist ein Teil der Signalverarbeitungselektronik für die Ausgangssignale des Hydrophons untergebracht, wobei die einzelnen Elektronikbausteine innerhalb des von der Hohlkugel 10 eingeschlossenen Bereichs der Trägerplatte 13 kontaktiert sind und so deren Anschlüsse über die Leiterbahnen 16 in der Trägerplatte 13 nach außen geführt sind. Durch die an Nullpotential liegenden äußeren Elektroden 112, 122 der beiden Kugelhalbschalen 11, 12 sind diese Elektronikbausteine gegen Einstrahlung von Störungen abgeschirmt. Im dargestellten Ausführungsbeispiel sind die Ladungsverstärker 14, 15 sowie die beiden RC-Glieder 23, 24 (Fig. 3) im Inneren der Hohlkugel 10 aufgenommen und in Fig. 1 insgesamt als Elektronikbaustein 25, 26 dargestellt. Entsprechend den Vorgaben in der Schaltungsanordnung der Fig. 3 ist der Elektronikbaustein 25 auf die Kontaktflächen 171, 176 und 174 und der Elektronikbaustein 26 auf die Kontaktflächen 172, 176 und 175 kontaktiert, wobei sich von den Kontaktflächen 176 je eine Kontaktfläche 176 auf der Ober- und Unterseite der Leiterplatte 13 befindet. Selbstverständlich ist es möglich, weitere Elektronikbausteine der Signalverarbeitungselektronik, z.B. einen den Ladungsverstärkern 14, 15 nachgeordneten Spannungsverstärker, in gleicher Weise mit in die Hohlkugel 10 zu integrieren.

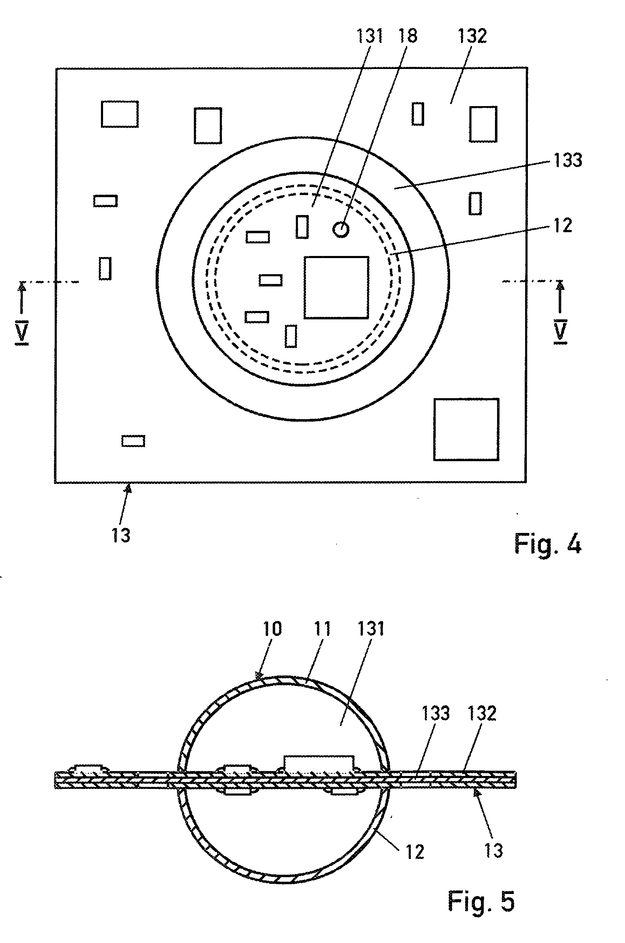

In Fig. 4 und 5 ist die erfindungsgemäße Modifizierung des beschriebenen Hydrophons dargestellt, wobei Fig. 4 eine Draufsicht des Hydrophons mit abgenommener oberer Kugelhalbschale 11 und Fig. 5 einen Schnitt längs der Linie V-V in Fig. 4 bei wieder aufgesetzter Kugelhalbschale 11 zeigt. Da dieses Hydrophon mit dem beschriebenen Hydrophon weitgehend übereinstimmt, sind gleiche Bauteile mit gleichen Bezugszeichen versehen.

Die erfindungsgemäße Modifizierung dieses Hydrophons besteht darin, dass das Leiterplattenmaterial der Trägerplatte 13 steif ist und zwischen dem von der Hohlkugel 10 eingeschlossenen steifen inneren Bereich 131 der Trägerplatte 13 und dem außerhalb der Hohlkugel liegenden steifen äußeren Bereich 132 der Trägerplatte 13 eine die beiden Bereiche 131, 132 miteinander verbindende flexible Materialzone 133 vorhanden ist. Auf dem inneren Bereich 131 der Trägerplatte sind - wie bei dem Hydrophon gemäß Fig. 1 - wiederum Elektronikbausteine angeordnet. Auf dem äußeren Bereich 132 wird die Trägerplatte 13 im Antennenträger festgelegt, so dass auch hier das Hydrophon im Freifeld betrieben werden kann und eine gute Körperschallentkopplung mit einer mechanisch stabilen und exakten Aufhängung vorhanden ist. Im äußeren Bereich 132 sind weitere Elektronikbausteine der Signalverarbeitungselektronik untergebracht. Alle Elektronikbausteine sind in Fig. 4 symbolisch durch quadratische oder rechteckige Vierecke dargestellt.

## Patentansprüche

1. Hydrophon für eine Unterwasserantenne mit zwei Kugelhalbschalen (11, 12) aus radial polarisiertem, piezoelektrischem Material, die jeweils eine die innere und äußere Schalenfläche bedeckende innere und äußere Elektrode (111, 112, 121, 122) aufweisen und längs ihrer gegeneinander elektrisch isolierten, kreisringförmigen Schalenränder zu einer Hohlkugel (10) zusammengesetzt sind, wobei die Kugelhalbschalen (11, 12) mit ihren Schalenrändern spiegelsymmetrisch an die Unter- und Oberseite einer Trägerplatte (13) aus elektrisch isolierendem Material angesetzt und an dieser befestigt sind und die Trägerplatte 13 integrierte Leiterbahnen (16) aufweist, auf die die Elektroden (111, 112, 121, 122) kontaktiert sind, wobei die Trägerplatte (13) aus einem steifen Leiterplatten-material besteht, **dadurch gekennzeichnet, dass** die Trägerplatte (13) zur körperschallentkoppelten Aufhängung des Hydrophons innerhalb der Unterwasserantenne in einen die Kugelhalbschalen (11, 12) tragenden inneren Bereich (131) und einen ihrer Aufhängung dienenden äußeren Bereich (132) unterteilt ist und zwischen den beiden Bereichen (131, 132) eine die beiden Bereiche (131, 132) miteinander verbindende flexible Materialzone (133) vorhanden ist.

2. Hydrophon nach Anspruch 1, **dadurch gekennzeichnet, dass** die Kontaktierung der Elektroden (111, 112, 121, 122) über mit den Leiterbahnen (16) verbundene Kontaktflächen (17) vorgenommen ist.

3. Hydrophon nach Anspruch 1 oder 2, **dadurch gekennzeichnet, dass** die Trägerplatte (13) innerhalb ihres in der Hohlkugel (10) liegenden Bereichs mindestens eine Aussparung (18) aufweist.

4. Hydrophon nach einem der Ansprüche 2 bis 3, **dadurch gekennzeichnet, dass** mindestens eine der beiden Elektroden (111, 121) einer Kugelhalbschale (11, 12), vorzugsweise die innere Elektrode (111, 121), eine den Schalenrand übergreifende Kontaktzunge (20) aufweist, die auf eine der Kontaktflächen (17) auf der Trägerplatte (13) kontaktiert ist.

5. Hydrophon nach Anspruch 4, **dadurch gekennzeichnet, dass** die Kontaktierung zwischen Kontaktzunge (20) und Kontaktfläche (17) mittels eines elektrisch leitenden Klebers hergestellt ist.

6. Hydrophon nach einem der Ansprüche 2 bis 5, **dadurch gekennzeichnet, dass** mindestens eine der beiden Elektroden (112, 122) einer Kugelhalbschale (11, 12), vorzugsweise die äußeren Elektroden (112, 122), über einen Leiterdraht (21 bzw. 22) auf eine der Kontaktflächen (17) der Trägerplatte (13) kontaktiert ist.

7. Hydrophon nach Anspruch 6, **dadurch gekennzeichnet, dass** der Leiterdraht (21, 22) an der Elektrode (112, 122) und/oder an der Kontaktfläche (17) durch Löten und/oder mittels eines elektrisch leitenden Klebstoffs befestigt ist.

8. Hydrophon nach einem der Ansprüche 1 bis 7, **dadurch gekennzeichnet, dass** die Befestigung der beiden Kugelhalbschalen 11, 12 auf der Trägerplatte (13) mittels eines Klebstoffs vorgenommen ist.

9. Hydrophon nach einem der Ansprüche 1 bis 8, **dadurch gekennzeichnet, dass** auf der Trägerplatte (13) innerhalb ihres von den Kugelhalbschalen (11, 12) eingeschlossenen Bereichs Elektronikbausteine (25, 26) einer Signalverarbeitungselektronik, vorzugsweise Vorverstärker (14, 15) für die Hydrophonausgangssignale, angeordnet und mit Kontaktflächen (17) auf der Trägerplatte (13) kontaktiert sind.

10. Hydrophon nach Anspruch 9, **dadurch gekennzeichnet, dass** die Signalverarbeitungselektronik in analoger Technik ausgeführt ist.

## Claims

1. A hydrophone for an underwater antenna with two spherical half shells (11, 12) of radially polarised, piezoelectric material that each comprise an inner and an outer electrode (111, 112, 121, 122) covering the inner and the outer shell surface and that are combined along their circular shell edges that are electrically insulated from each other to a hollow sphere (10), whereby the spherical half shells (11, 12) are placed with their shell edges with mirror symmetry on the lower and the upper side of a carrier plate (13) of electrically insulating material and fastened to the latter and which carrier plate 13 comprises integrated conducting tracks (16) which contact the electrodes (111, 112, 121, 122), whereby the carrier plate (13) consists of a rigid conductor plate material, **characterized in that** the carrier plate (13) is subdivided for the suspension, decoupled from structure-borne noise, of the hydrophone inside the underwater antenna into an inner area (131) carrying the spherical half shells (11, 12) and into an outer area (132) serving for their suspension, and that a flexible material zone (133) is present between the two areas (131, 132) that connects them to one another.

2. The hydrophone according to claim 1, **characterized in that** the contacting of the electrodes (111, 112, 121, 122) is carried out via contact surfaces (17) connected to the conducting tracks (16).

3. The hydrophone according to claim 1 or 2, **characterized in that** the carrier plate (13) comprises at least one recess (18) inside its area located in the hollow sphere (10).

4. The hydrophone according to one of claims 2 to 3, **characterized in that** at least one of the two electrodes (111, 121) of a spherical half shell (11, 12), preferably the inner electrode (111, 121), comprises a contact tongue (20) extending over the shell edge and contacting one of the contact surfaces (17) on the carrier plate (13).

5. The hydrophone according to claim 4, **characterized in that** the contacting between contact tongue (20) and contact surface (17) is established by an electrically conductive adhesive.

6. The hydrophone according to one of claims 2 to 5, **characterized in that** at least one of the 2 electrodes (112, 122) of a spherical half shell (11, 12), preferably the outer electrodes (112, 122), contacts one of the contact surfaces (17) of the carrier plate (13) via a conductor wire (21 or 22).

7. The hydrophone according to claim 6, **characterized in that** the conductor wire (21, 22) is fastened to the electrode (112, 122) and/or to the contact surface (17) by soldering and/or by an electrically conductive adhesive.

8. The hydrophone according to one of claims 1 to 7, **characterized in that** the fastening of the two spherical half shells , 11, 12 is carried out on the carrier plate (13) by an adhesive.

9. The hydrophone according to one of claims 1 to 8, **characterized in that** electronic modules (25, 26) of signal processing electronic components, preferably preamplifiers (14, 15) for the hydrophone output signals are arranged on the carrier plate (13) inside its area enclosed by the spherical half shells (11, 12) and are contacted by contact surfaces (17) on the carrier plate (13).

10. The hydrophone according to claim 9, **characterized in that** the signal processing electronic components are designed with analogue technology.

## Revendications

1. Hydrophone pour antenne sous-marine, comportant deux demi-sphères (11, 12) en matériau piézoélectrique à polarisation radiale, dotées respectivement d'électrodes internes et externes (111, 112, 121, 122) couvrant les faces internes et externes de la sphère et assemblées en forme de sphère creuse (10) le long des bords annulaires de la sphère isolés électriquement l'un de l'autre, les demi-sphères (11, 12) étant fixées avec leurs bords par symétrie spéculaire sur le bord inférieur et supérieur d'une plaque support (13) en matériau électriquement isolant et la plaque support (13) présentant des pistes conductrices (16) intégrées et auxquelles les électrodes (111, 112, 121, 122) sont connectées, la plaque support (13) étant constituée d'un matériau de circuit imprimé rigide, **caractérisé en ce que**, pour la suspension de l'hydrophone couplée aux sphères dans l'antenne sous-marine, la plaque support (13) est divisée en une zone interne (131) portant les demi-sphères (11, 12) et en une zone externe (132) servant à sa suspension et **en ce qu'**une zone de matériau (133) souple reliant les deux zones (131, 132) l'une à l'autre est prévue entre les deux zones (131, 132)

2. Hydrophone selon la revendication 1, **caractérisé en ce que** la connexion des électrodes (111, 112, 121, 122) se fait par le biais de plages de contact (17) reliées aux pistes conductrices (16).

3. Hydrophone selon la revendication 1 ou 2, **caractérisé en ce que** la plaque support (13) présente au moins un évidement (18) dans sa zone située dans la sphère creuse (10).

4. Hydrophone selon l'une quelconque des revendications 2 à 3, **caractérisé en ce qu'**au moins une des deux électrodes (111, 121) d'une demi-sphère (11, 12), de préférence l'électrode interne (111, 121), présente une lame de contact (20) chevauchant le bord de la sphère et connectée à l'une des plages de contact (17) de la plaque support (13).

5. Hydrophone selon la revendication 4, **caractérisé en ce que** la connexion entre la lame de contact (20) et la plage de contact (17) se fait par le biais d'un adhésif électro-conducteur.

6. Hydrophone selon l'une quelconque des revendications 2 à 5, **caractérisé en ce qu**'au moins une des deux électrodes (112, 122) d'une demi-sphère (11, 12), de préférence les électrodes externes (112, 122), est connectée à l'une des plages de contact (17) de la plaque support (13) par un fil conducteur (21 et/ou 22).

7. Hydrophone selon la revendication 6, **caractérisé en ce que** le fil conducteur (21, 22) est fixé à l'électrode (112, 122) et/ou à la plage de contact (17) par brasage et/ou à l'aide d'un adhésif électro-conducteur.

8. Hydrophone selon l'une quelconque des revendications 1 à 7, **caractérisé en ce que** la fixation des deux demi-sphères 11, 12 se fait sur la plaque support (13) au moyen d'un adhésif.

9. Hydrophone selon l'une quelconque des revendications 1 à 8, **caractérisé en ce que** des modules électroniques (25, 26) d'un système électronique de traitement des signaux, de préférence un préamplificateur (14, 15) pour les signaux de sortie de l'hydrophone, sont disposés sur la plaque support (13) dans sa zone entourée par les demi-sphères (11, 12) et en contact avec les plages de contact (17) de la plaque support (13).

10. Hydrophone selon la revendications 9, **caractérisé en ce que** le système électronique de traitement des signaux est réalisé en technique analogique.
